# EUROPÄISCHE PATENTSCHRIFT

(11) **EP 1 989 526 B1**
(45) Veröffentlichungstag und Bekanntmachung des Hinweises auf die Patenterteilung: **12.05.2010**
(21) Anmeldenummer: 07701344.9
(22) Anmeldetag: 01.03.2007
(51) Int. Cl.: G01M 15/00

(54) **PRÜFSTANDS-SENSORVORRICHTUNG, SOWIE PRÜFSTAND, VORZUGSWEISE FÜR KRAFTMASCHINEN**
SENSOR DEVICE FOR A TEST STAND AND TEST STAND, PREFERABLY FOR ENGINES
DISPOSITIF DE DETECTION DE BANC D'ESSAI ET BANC D'ESSAI DE PREFERENCE DESTINE A DES MOTEURS

(30) Priorität: 02.03.2006 AT 1522006 U
(43) Veröffentlichungstag der Anmeldung: 12.11.2008
(73) Patentinhaber: AVL List GmbH, 8020 Graz (AT)
(72) Erfinder: NEUWIRTH, Werner, A-8041 Graz (AT)
(74) Vertreter: Laminger, Norbert
(86) Internationale Anmeldenummer: PCT/AT2007/000103
(87) Internationale Veröffentlichungsnummer: WO 2007/098519

(56) Entgegenhaltungen:
- EP-A2- 1 180 674
- EP-B1- 0 918 212
- WO-A-2005/005930
- US-A- 4 993 258

## Beschreibung

Die Erfindung betrifft eine Prüfstands-Sensorvorrichtung, umfassend zumindest einen Sensor zur Erfassung von Daten des Prüflings und/oder der Umgebung, wobei die Sensorvorrichtung eine Einheit zur drahtlosen Übertragung der Sensordaten und eines für den Sensor charakteristischen Codes und eine Energieversorgungseinheit zur Umwandlung elektromagnetischer Strahlung in elektrische Energie einschließlich einer Puffereinrichtung aufweist, sowie einen Prüfstand, vorzugsweise für Kraftmaschinen, umfassend zumindest eine Prüfzelle mit zumindest einem Sensor zur Erfassung von Daten des Prüflings und/oder der Umgebung, sowie zumindest eine Auswerte- und/oder Speichereinheit für die Daten, und allenfalls zumindest einen Rüstraum zur Vorbereitung des Prüflings und/oder des zumindest einen Sensors.

Schon bei einfachsten Prüfständen, bei welchen das zu prüfende Fahrzeug mit seinen Antriebsrädern auf eine Einzel- oder Doppelrolle eines Rollenprüfstandes gestellt und mittels einer geeigneten Feststelleinrichtung relativ zum Rollenprüfstand fixiert wird, kommt eine komplexe Anordnung von Sensorik und Aktorik zum Einsatz. So müssen beispielsweise Daten der angetriebenen bzw. gebremsten Prüfstandsrollen - heutzutage zumeist mittels elektrischer Antriebs- bzw. Belastungsmaschine gesteuert bremsbar bzw. auch antreibbar - übertragen werden, es müssen aber auch Steuersignale an die Antriebe dieser Rollen übermittelt werden.

Insbesonders im Entwicklungsbereich, speziell der Motorenentwicklung, sowie zum Teil auch im Bereich der Endkontrolle der Fahrzeughersteller sind Prüfstandsanordnungen in noch viel weiter ausgebauten Stufen in Verwendung. Dabei sind eine Vielzahl von Mess- und Versorgungsaggregaten für den Prüfling vorgesehen, wie beispielsweise Messgeräte für den Kraftstoffverbrauch, Abgasmessgeräte, akustische Messgeräte, Temperaturüberwachungsgeräte für Kühl- und Schmiermedien und dgl., sowie andererseits zusätzliche Anordnungen zur Kühlluft- bzw. Kühlwasserkonditionierung, zur separaten Kühlung und Aufbereitung von Schmiermedien, bzw. diverse Einrichtungen zur zentralen Messdatenerfassung und Auswertung sowie zur Steuerung der Prüfabläufe und Ähnliches. All das macht moderne Prüfstandsanordnungen der eingangs genannten Art sehr kompliziert im Aufbau, mit hohem Aufwand speziell für die optimale Verlegung der Mess- und Steuerleitungen, aber auch der Energieversorgung aller Sensor- und Aktoranordnungen.

Ein Prüfstand mit einem Datenkommunkationssystem, welches zumindest über Teilstrecken drahtlose Datenkommunikation vorsieht, ist beispielsweise in der EP 1 180 674 A2 beschrieben.

Aus der EP 0 918 212 B1 ist es bekannt, physikalische Größen mittels Sensoren zu erfassen und mittels Funkübertragung durch eine mit den Sensoren verbundenen Sendeeinrichtung zu einer Auswerteeinrichtung zu übertragen. Dabei wird auch auf die Offenbarung der JP-A-60 220 833 betreffend eine Energieversorgung mittels Solarzelle hingewiesen.

Die Aufgabe der vorliegenden Erfindung war daher eine Sensorvorrichtung für derartige Prüfstände, welche einen einfachen und unkomplizierten Aufbau sowie Wartung des Prüfstandes ermöglicht, dabei aber den Anforderungen der Betriebsicherheit, Ausfallsicherheit und Funktionssicherheit genügt.

Zur Lösung dieser Aufgabe ist erfindungsgemäß vorgesehen, daß die Sensorvorrichtung eine Sendeeinheit für Ladezustandsmeldungen der Puffereinrichtung aufweist.. Damit können Funktionsstörungen bzw. Totalausfälle aufgrund von Ausfällen der Energieversorgung so gut als möglich vermieden werden bzw. kann für bessere Beleuchtung des Sensors, für Austausch der Energiequelle oder aber für Ersatz der Sensorvorrichtung selbst gesorgt werden, bevor der Prüflauf durch Ausfall der Sensorvorrichtung unbrauchbar wird oder abgebrochen werden muß.

Um die Sensorvorrichtung möglichst lange autark und ohne großen Wartungsaufwand betreiben zu können, ist sie gemäß einer vorteilhaften Ausführungsform dadurch gekennzeichnet, daß die Energieversorgungseinheit photovoltaische Zellen aufweist. Da bei den meisten Prüfstandsanordnungen ohnedies eine große Anzahl von Lichtquellen vorhanden ist, kann damit ohne wesentlichen Mehraufwand der vereinfachte Aufbau des Prüfstandes erzielt werden.

Andererseits könnte, wieder unter Vermeidung von physischen Leitungen für die Energieversorgung der Sensorvorrichtung auch alternativ vorgesehen sein, daß die Energieversorgungseinheit zumindest eine Spule zur Umwandlung elektromagnetischer Felder in Elektrizität aufweist. Damit kann auch bei Fehlen von Lichtquellen oder deren absichtlicher Vermeidung die drahtlose Energieversorgung der Sensorvorrichtung sichergestellt werden.

Gemäß einer ersten Ausführungsform der Erfindung umfasst die Puffereinrichtung einen Kondensator.

Eine andere Ausführungsform sieht dagegen vor, daß die Puffereinrichtung einen Akkumulator umfasst.

Vorteilhafterweise kann die Sensorvorrichtung auch zusätzlich noch dadurch gekennzeichnet sein, daß eine Empfangseinheit zum Empfang drahtlos übermittelter Steuersignale vorgesehen ist.

Die Aufgabe der vorliegenden Erfindung wird auch durch einen Prüfstand wie eingangs beschrieben gelöst, der dadurch gekennzeichnet ist, daß zumindest ein Sensor gemäß einem der vorhergehenden Absätze gestaltet ist.

Gemäß einer vorteilhaften Ausführungsform der Erfindung sind Einrichtungen zur im wesentlichen kontinuierlichen Erzeugung von elektromagnetischer Strahlung für die Sensorvorrichtungen in zumindest einer der Prüfzellen vorgesehen. Damit ist in der Prüfzelle der einfache und unkomplizierte Aufbau gewährleistet. Durch Vermeidung von physischen Leitungen sind auch die Betriebsicherheit, Ausfallsicherheit und Funktionssicherheit gegeben, da Fehler in der Zusammenschaltung beispielsweise von Datenverbindungen weitgehend reduziert sind. Auch die Gefahr von Verletzungen oder Beschädigung von Sensoren, Kabeln, usw. ist durch den übersichtlichen Aufbau minimiert.

Vorteilhafterweise sind unter Ausweitung dieser genannten Vorteile bereits auf die Vorbereitung des Testlaufes und die Überprüfung des korrekten Aufbaus die Einrichtungen zur im wesentlichen kontinuierlichen Erzeugung von elektromagnetischer Strahlung für die Sensorvorrichtungen in zumindest einem Rüstraum vorgesehen.

Falls nicht ohnedies zum Ausleuchten des Prüfstandes bzw. Rüstraumes vorhandene Einrichtungen genutzt werden können, ist gemäß einer vorteilhaften Ausführungsform der Erfindung vorgesehen, daß Beleuchtungseinrichtungen für die photovoltaischen Zellen der Energieversorgungseinheiten der Sensorvorrichtungen vorgesehen sind.

Um ohne Beleuchtungseinrichtungen auskommen zu können und dennoch die Energieversorgung entsprechender Sensorvorrichtungen zu ermöglichen, sieht eine alternative Ausführungsform der Erfindung vor, daß Einrichtungen zur Erzeugung von elektromagnetischen Feldern vorgesehen sind.

Vorteilhafterweise kann vorgesehen sein, daß die Feld- bzw. Leuchtstärke der Beleuchtungseinrichtungen bzw. Einrichtungen zur Erzeugung von elektromagnetischen Feldern einstellbar ist, vorzugsweise über eine abhängig von den Ladezustandsmeldungen der Sensorvorrichtungen arbeitende Steuerschaltung. Damit kann die dauernde Beleuchtung bzw. Bestrahlung vermieden und Energie gespart werden. Vorzugsweise wird die Leuchtstärke bzw. auch die Feldstärke der elektromagnetischen Felder nach den Leistungsbedürfnissen der am schwächsten beleuchteten bzw. versorgten Sensorvorrichtung gesteuert.

Gemäß einer weiteren Ausführungsform der Erfindung ist der Prüfstand dadurch gekennzeichnet, daß eine Sendeeinheit für Steuersignale für die Sensoreinrichtungen vorgesehen ist, vorzugsweise in die Auswerte- und/oder Speichereinheit integriert oder damit verbunden. Mit dieser Art bidirektionalem Datentransfer lässt sich auch die Synchronisierung der Sensorvorrichtungen erreichen.

Wenn weiters in der Auswerte- und Speichereinheit eine Abfrageroutine implementiert ist, welche die Sensorvorrichtungen überwacht und unzureichenden Ladezustand und/oder Ausfall registriert bzw. signalisiert, können fehlerhafte Prüfläufe frühzeitig abgebrochen bzw. entsprechende Maßnahmen ergriffen werden oder kann zumindest im Nachhinein eine Fehleridentifizierung erfolgen bzw. erleichtert werden.

Um den Aufbau des Prüfstandes einfacher zu machen und Fehler in den Datenverbindungen zu vermeiden, ist eine vorteilhafte Ausführungsform der Erfindung dadurch gekennzeichnet, daß in der Auswerte- und Speichereinheit eine Routine implementiert ist, welche die Sensorvorrichtungen identifiziert und bestimmten Messkanälen zuordnet.

Wenn schon im Rüstraum eine Sendeeinheit für Steuersignale für die Sensoreinrichtungen und eine Auswerteeinheit vorgesehen sind, wobei eine Abfrageroutine implementiert ist, welche die Sensorvorrichtungen überwacht und unzureichenden Ladezustand und/oder Ausfall registriert bzw. signalisiert, kann bereits vor dem eigentlichen Testlauf eine Funktionskontrolle der Sensorik durchgeführt werden.

Vorteilhafterweise ist zur vollständigen Vorbereitung des eigentlichen Testlaufes vorgesehen, in der Sendeeinheit bzw. der Auswerteeinheit im Rüstraum eine Routine implementiert ist, welche die Sensorvorrichtungen identifiziert und bestimmten Messkanälen der Auswerte- und Speichereinheit des Prüfstandes zuordnet. Damit kann der Aufbau des Prüflings und der Sensorik bereits im Vorfeld des Prüflaufes vollständig vorbereitet werden, so daß die eigentliche Prüfzelle optimal genutzt werden kann.

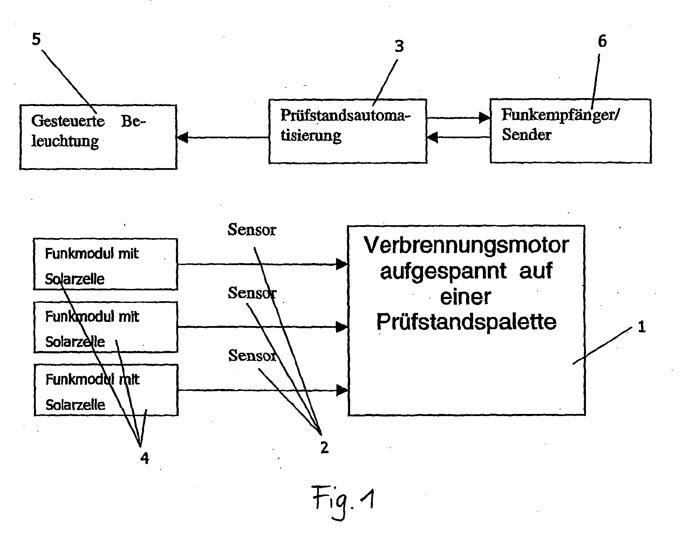

In der nachfolgenden Beschreibung soll die Erfindung anhand eines bevorzugten Ausführungsbeispieles näher erläutert werden, das auch in den beigefügten Zeichnungen dargestellt ist. Dabei zeigt die Abbildung ein schematisches Blockschaltbild eines erfindungsgemäß ausgestatteten Prüfstandes.

Ein erfindungsgemäß gestalteter Prüfstand könnte etwa in Form einer Prüfstandspalette 1 vorliegen, auf welcher vorzugsweise in einem Rüstraum ein Verbrennungsmotor als Prüfling aufgespannt ist. Zur Erfassung von Daten dieses Motors, aber auch von dessen Betriebsmitteln und/oder der Umgebung sind dann in der eigentlichen Prüfzelle mehrere, hier beispielsweise drei Sensorvorrichtungen 2, 4 vorgesehen. Die Sensorvorrichtungen 2, 4 können auch bereits im Rüstraum aufgebaut und mit dem Prüfling verbunden werden. Als Teil der Prüfstandspalette 1, allenfalls auch getrennt davon und mittels geeigneter Datenübertragungseinrichtungen gekoppelt, ist eine Auswerte- und/oder Speichereinheit für die Daten der Sensorvorrichtungen vorgesehen, die Teil einer Prüfstandsautomatisierung und -steuerung 3 sein kann.

Die Prüfstands-Sensorvorrichtung 2 umfaßt erfindungsgemäß neben der eigentlichen Sensorik 2 zusätzlich eine Einheit 4 zur drahtlosen Übertragung sowohl eines Identifizierungscodes für den jeweilige Sensor sowie der Sensordaten. Diese Sensor-Identifikation könnte allenfalls auch aus Frequenz oder anderen Eigenschaften der Daten bzw. Datenpakete selbst ermittelt oder definiert werden. Damit kann ohne physische Verkabelung eine Verbindung der Sensorvorrichtungen 2, 4 mit einer Auswerte- und/oder Speichereinheit der Prüfstandsautomatisierung und -steuerung 3 hergestellt werden, wobei zu Beginn die Zuordnung zwischen Sensoren 2, 4 und Messkanälen in der Auswerte- und/oder Speichereinheit der Prüfstandsautomatisierung und -steuerung 3 definiert wird. Diese Vorbereitung kann bereits im Rüstraum erfolgen, bevor noch die Prüfstandspalette 1 in die eigentliche Prüfzelle verbracht wird. Um die Auswerte- und/oder Speichereinheit der Prüfstandsautomatisierung und -steuerung 3 nicht zu überlasten, kann dabei auch eine separate Auswerte- und/oder Speichereinheit im Rüstraum vorgesehen sein, mit Hilfe derer die Inbetriebnahme und beschriebene Vorprogrammierung durchgeführt und anschließend auf die Einheit der Prüfzelle übertragen wird.

Die Sensorvorrichtungen 2, 4 sind für einen einfacheren, übersichtlicheren Aufbau am Prüfstand nicht nur mit kabelloser Datenübertragung versehen, sondern auch mit einer drahtlosen Energieversorgung über künstliche elektromagnetische Strahlung, mit welcher die Sensorvorrichtungen 2, 4 im wesentlichen kontinuierlich versorgt werden und welche dort in elektrische Energie umgewandelt wird. Die Energieversorgung kann dabei vorteilhafterweise über Solarzellen der Sensorvorrichtungen 2, 4 erfolgen, könnte aber auch über zumindest eine Spule zur Umwandlung elektromagnetischer Felder, vorzugsweise im kHz-Bereich, erfolgen. Die Einrichtungen 5 zur im wesentlichen kontinuierlichen Erzeugung der von den Sensorvorrichtungen 2, 4 benötigten elektromagnetischen Strahlung müssen in zumindest einer der Prüfzellen des Prüfstandes vorgesehen sein, sind vorteilhafterweise aber bereits in zumindest einem Rüstraum vorgesehen, damit die Vorbereitung, der Aufbau und die Funktionskontrolle der Sensorik bereits dort komplett durchgeführt werden kann und nicht die eigentliche Prüfzelle unnötig blockiert.

Um kurzfristige Unterbrechungen der Beleuchtung bzw. Energieversorgung über elektromagnetische Felder abfangen zu können, weist die Energieversorgungseinheit 4 eine Puffereinrichtung auf, beispielsweise einen Kondensator und/oder einen Akkumulator.

Bei wesentlich vereinfachter Verkabelung am Prüfstand 1 werden die Sensorsignale der Sensorik 2 zumindest während des eigentlichen Prüflaufes bereits in der Nähe der Sensoren dezentral digitalisert und über die Einheit 4 per Funkübertragung zu einem mit der Auswerte- und/oder Speichereinheit der Prüfstandsautomatisierung und -steuerung 3 verbundenen Empfänger 6 übertragen. Die Übertragungsfrequenz liegt vorzugweise im GHz-Bereich und benötigt daher nur kurze Antennen. Die erforderliche Übertragungsenergie liegt bei 100 µWs pro Übertragungsvorgang und die Erfassungsraten bei 10 Hz pro Sensor.

In der Prüfstandsautomatisierung und -steuerung 3 kann nicht nur ein Empfänger 6 für die Datensignale der Sensoren 2 vorgesehen sein, sondern vorteilhafterweise auch eine Sendeeinheit für Steuersignale für die Sensoreinrichtungen 2, 4 vorhanden sein, etwa in Form einer kombinierten Empfänger-Sender-Einheit 6. Der Funkempfänger/Sender 6 sendet Synchronisiertelegramme und Parameter zu den Funkmodulen der Sensorvorrichtungen 2, 4 und empfängt von dort die Messdaten und Nachricht über den Leistungsbedarf. Die Prüfstandsautomatisierung 3 stellt die Parameter und die Synchronisation zur Verfügung.

In dieser Empfänger-Sender-Einheit 6 und/oder in der Auswerte- und Speichereinheit 3 ist nun eine Abfrageroutine implementiert, welche die Sensorvorrichtungen 2, 4 überwacht und unzureichenden Ladezustand und/oder Ausfall registriert bzw. signalisiert. Diese Überwachung wertet zusätzliche Signale aus, die über die Sendeeinrichtungen 4 übermittelt werden, und die Beleuchtungssituation und/oder Ladezustandsmeldungen des Kondensators bzw. Akkumulators signalisieren. Die Prüfstandsautomatisierung 3 überprüft dazu zyklisch ob alle parametrierten Sensorvorrichtungen 2, 4 Daten senden. Ist dies nicht der Fall oder meldet ein Funkmodul über mehrere Minuten eine negative Leistungsbilanz wird beispielsweise eine Meldung an den Prüfstandsfahrer ausgegeben. Teile dieser Funktionalität, welche für die Inbetriebnahme und Funktionsüberprüfung notwendig sind, können auch im Rüstraum in einer separaten Einheit realisiert sein.

Zur Beleuchtung der Solarzellen der Sensorvorrichtungen 2, 4 sind am Prüfstand 1 Beleuchtungseinrichtungen 5 oder auch Einrichtungen zur Erzeugung von elektromagnetischen Feldern vorgesehen. Dabei kann die Leuchtstärke der Beleuchtungseinrichtungen 5, oder die Feldstärke elektromagnetischer Felder, einstellbar sein, vorzugsweise über eine abhängig von den Ladezustandsmeldungen der Sensoreinrichtungen 2, 4 arbeitende Steuerschaltung in der Prüfstandsautomatisierung und -steuerung 3.

## Patentansprüche

1. Prüfstands-Sensorvorrichtung, umfassend zumindest einen Sensor zur Erfassung von Daten des Prüflings und/oder der Umgebung, wobei die Sensorvorrichtung eine Einheit (4) zur drahtlosen Übertragung der Sensordaten und eines für den Sensor charakteristischen Codes und eine Energieversorgungseinheit (4) zur Umwandlung elektromagnetischer Strahlung in elektrische Energie einschließlich einer Puffereinrichtung aufweist, **dadurch gekennzeichnet, daß** die Sensorvorrichtung (2, 4) eine Sendeeinheit (4) für Ladezustandsmeldungen der Puffereinrichtung aufweist.

2. Sensorvorrichtung nach Anspruch 1, **dadurch gekennzeichnet, daß** die Energieversorgungseinheit (4) photovoltaische Zellen aufweist.

3. Sensorvorrichtung nach Anspruch 1, **dadurch gekennzeichnet, daß** die Energieversorgungseinheit (4) zumindest eine Spule zur Umwandlung elektromagnetischer Felder in Elektrizität aufweist.

4. Sensorvorrichtung nach einem der Ansprüche 1 bis 3, **dadurch gekennzeichnet, daß** die Puffereinrichtung einen Kondensator umfasst.

5. Sensorvorrichtung nach einem der Ansprüche 1 bis 3, **dadurch gekennzeichnet, daß** die Puffereinrichtung einen Akkumulator umfasst.

6. Sensorvorrichtung nach einem der Ansprüche 1 bis 5, **dadurch gekennzeichnet, daß** eine Empfangseinheit (4) zum Empfang drahtlos übermittelter Steuersignale vorgesehen ist.

7. Prüfstand, vorzugsweise für Kraftmaschinen, umfassend zumindest eine Prüfzelle mit zumindest einem Sensor zur Erfassung von Daten des Prüflings und/oder der Umgebung, sowie zumindest eine Auswerte- und/oder Speichereinheit für die Daten, und allenfalls zumindest einen Rüstraum zur Vorbereitung des Prüflings und/oder des zumindest einen Sensors, **dadurch gekennzeichnet, daß** zumindest eine Sensorvorrichtung (2, 4) gemäß einem der Ansprüche 1 bis 6 gestaltet ist.

8. Prüfstand nach Anspruch 7, **gekennzeichnet durch** Einrichtungen (5) zur im wesentlichen kontinuierlichen Erzeugung von elektromagnetischer Strahlung zur Versorgung der Sensorvorrichtungen (2, 4) in zumindest einer der Prüfzellen.

9. Prüfstand nach Anspruch 7 oder 8, **dadurch gekennzeichnet, daß** Einrichtungen (5) zur im wesentlichen kontinuierlichen Erzeugung von elektromagnetischer Strahlung zur Versorgung der Sensorvorrichtungen (2, 4) in zumindest einem Rüstraum vorgesehen sind.

10. Prüfstand nach Anspruch 8 oder 9, **gekennzeichnet durch** Beleuchtungseinrichtungen (5) für die photovoltaischen Zellen der Energieversorgungseinheiten (4) der Sensorvorrichtungen (2, 4).

11. Prüfstand nach Anspruch 8 oder 9, **gekennzeichnet durch** Einrichtungen zur Erzeugung von elektromagnetischen Feldern.

12. Prüfstand nach einem der Ansprüche 8 bis 11, **dadurch gekennzeichnet, daß** die Feld- bzw. Leuchtstärke der Beleuchtungseinrichtungen (5) bzw. Einrichtungen zur Erzeugung von elektromagnetischen Feldern einstellbar ist, vorzugsweise über eine abhängig von den Ladezustandsmeldungen der Sensorvorrichtungen (2, 4) arbeitende Steuerschaltung.

13. Prüfstand nach einem der Ansprüche 7 bis 12, **dadurch gekennzeichnet, daß** eine Sendeeinheit (6) für Steuersignale für die Sensoreinrichtungen (2, 4) vorgesehen ist, vorzugsweise in die Auswerte- und/oder Speichereinheit (3) integriert oder damit verbunden.

14. Prüfstand nach einem der Ansprüche 7 bis 13, **dadurch gekennzeichnet, daß** in der Auswerte- und Speichereinheit (3) eine Abfrageroutine implementiert ist, welche die Sensorvorrichtungen (2, 4) überwacht und unzureichenden Ladezustand und/oder Ausfall registriert bzw. signalisiert.

15. Prüfstand nach einem der Ansprüche 7 bis 14, **dadurch gekennzeichnet, daß** in der Auswerte- und Speichereinheit (3) eine Routine implementiert ist, welche die Sensorvorrichtungen (2, 4) identifiziert und bestimmten Messkanälen zuordnet.

16. Prüfstand nach einem der Ansprüche 7 bis 15, **dadurch gekennzeichnet, daß** im Rüstraum eine Sendeeinheit für Steuersignale für die Sensoreinrichtungen (2, 4) und eine Auswerteeinheit vorgesehen sind, wobei eine Abfrageroutine implementiert ist, welche die Sensorvorrichtungen (2, 4) überwacht und unzureichenden Ladezustand und/oder Ausfall registriert bzw. signalisiert.

17. Prüfstand nach Anspruch 16, **dadurch gekennzeichnet, daß** in der Sendeeinheit bzw. der Auswerteeinheit im Rüstraum eine Routine implementiert ist, welche die Sensorvorrichtungen (2, 4) identifiziert und bestimmten Messkanälen der Auswerte- und Speichereinheit (3) des Prüfstandes zuordnet.

## Claims

1. A test bench sensor device, comprising at least one sensor for detecting data of the test piece and/or the environment thereof, wherein the sensor device has a device (4) for the wireless transmission of the sensor data and a code that is characteristic for the sensor, and an energy supply device (4) for converting electromagnetic radiation into electric energy, including a buffer device, **characterized in that** the sensor device (2, 4) comprises a transmission device (4) for charge state notifications of the buffer device.

2. The sensor device according to claim 1, **characterized in that** the energy supply device (4) has photovoltaic cells.

3. The sensor device according to claim 1, **characterized in that** the energy supply device (4) has at least one coil for converting electromagnetic fields into electricity.

4. The sensor device according to one of the claim 1 to 3, **characterized in that** the buffer device comprises a capacitor.

5. The sensor device according to one of the claims 1 to 3, **characterized in that** the buffer device comprises an accumulator.

6. The sensor device according to one of the claims 1 to 5, **characterized in that** the receiving device (4) is provided for receiving control signal transmitted in a wireless manner.

7. A test bench, preferably for engines, comprising at least one test cell having at least one sensor for detecting data of the test piece and/or the environment, and at least one analysis and/or memory device for the data, and optionally at least one setup chamber for preparing the test piece and/or the at least one sensor, **characterized in that** at least one sensor device (2, 4) is configured according to one of the claims 1 to 6.

8. The test bench according to claim 7, **characterized by** devices (5) for the substantially continuous generation of electromagnetic radiation for supplying the sensor devices (2, 4) in at least one of the test cells.

9. The test bench according to claims 7 or 8, **characterized in that** devices (5) are provided in at least one setup chamber substantially for the continuous generation of electromagnetic radiation for supplying the sensor devices (2, 4).

10. The test bench according to claims 8 or 9, **characterized by** illumination devices (5) for the photovoltaic cells of the energy supply devices (4) of the sensor devices (2, 4).

11. The test bench according to claims 8 or 9, **characterized by** devices for generating electromagnetic fields.

12. The test bench according to one of the claim 8 to 11, **characterized in that** the field or illumination strength of the illumination devices (5) or devices for generating electromagnetic fields can be adjusted, preferably via a control circuit operating as a function of the charge state notifications of the sensor devices (2, 4).

13. The test bench according to one of the claims 7 to 12, **characterized in that** a transmission device (6) is provided for control signals for the sensor devices (2, 4), which is preferably integrated into the analysis and/or memory device (3), or connected to the same.

14. The test bench according to one of the claim 7 to 13, **characterized in that** an inquiry routine is implemented in the analysis and memory devices (3), which monitors the sensor devices (2, 4) and registers or signalizes any insufficient charge state and/or failure.

15. The test bench according to one of the claim 7 to 14, **characterized in that** a routine is implemented in the analysis and memory device (3), which identifies the sensor devices (2, 4) and associates the same with certain measuring channels.

16. The test bench according to one of the claims 7 to 15, **characterized in that** a transmission device for control signals for the sensor devices (2, 4) and an analysis device are provided in the setup chamber, wherein an inquiry routine is implemented that monitors the sensor devices (2, 4) and registers or signalizes any insufficient charge state and/or failure.

17. The test bench according to claim 16, **characterized in that** a routine can be implemented in the transmission device, or in the analysis device, which identifies the sensor devices (2, 4) and associates the same to certain measuring channels of the analysis and memory device (3) of the test bench.

## Revendications

1. Dispositif capteur de banc d'essai, comprenant au moins un capteur pour la détection des données d'un l'échantillon et/ou de l'environnement, dans lequel le dispositif capteur comporte une unité (4) pour la transmission sans fil des données de capteur et d'un code caractéristique du capteur, ainsi qu'une unité d'alimentation en énergie (4) pour la conversion d'un rayonnement électromagnétique en énergie électrique, incluant un dispositif tampon, **caractérisé en ce que** le dispositif capteur (2, 4) comporte une unité émettrice (4) pour communiquer l'état de charge du dispositif tampon.

2. Dispositif capteur selon la revendication 1, **caractérisé en ce que** l'unité d'alimentation en énergie (4) comporte des cellules photovoltaïques.

3. Dispositif capteur selon la revendication 1, **caractérisé en ce que** l'unité d'alimentation en énergie (4) comporte au moins une bobine pour la conversion des champs électromagnétiques en électricité.

4. Dispositif capteur selon l'une des revendications 1 à 3, **caractérisé en ce que** le dispositif tampon comporte un condensateur.

5. Dispositif capteur selon l'une des revendications 1 à 3, **caractérisé en ce que** le dispositif tampon comporte un accumulateur.

6. Dispositif capteur selon l'une des revendications 1 à 5, **caractérisé en ce qu'**une unité réceptrice (4) est prévue pour la réception de signaux de commande transmis sans fil.

7. Banc d'essai, de préférence pour des machines motrices, comportant au moins une chambre d'essai avec au moins un capteur pour la détection des données d'un échantillon et/ou de l'environnement, ainsi qu'au moins une unité d'évaluation et/ou de mémoire pour les données, et dans tous les cas au moins une chambre d'équipement pour la préparation de l'échantillon et/ou de l'au moins un capteur, **caractérisé en ce qu'**au moins un dispositif capteur (2, 4) est conçu selon l'une des revendications 1 à 6.

8. Banc d'essai selon la revendication 7, **caractérisé par** des systèmes (5) pour la production essentiellement continue d'un rayonnement électromagnétique pour l'alimentation du dispositif capteur (2, 4) dans au moins l'une des chambres d'essai.

9. Banc d'essai selon l'une des revendications 7 ou 8, **caractérisé en ce que** des dispositifs (5) pour la production essentiellement continue d'un rayonnement électromagnétique pour l'alimentation des dispositifs capteurs (2, 4) sont prévus dans au moins une chambre d'équipement.

10. Banc d'essai selon l'une des revendications 8 ou 9, **caractérisé par** des dispositifs d'éclairage (5) pour les cellules photovoltaïques des unités d'alimentation en énergie (4) des dispositifs capteurs (2, 4).

11. Banc d'essai selon l'une des revendications 8 ou 9, **caractérisé par** des dispositifs pour la production de champs magnétiques.

12. Banc d'essai selon l'une des revendications 8 à 11, **caractérisé en ce que** l'intensité de champ et d'éclairage des dispositifs d'éclairage (5) ou des dispositifs pour la production de champs électromagnétiques peuvent être réglés, de préférence par un circuit de commande travaillant en fonction des informations d'état de charge des dispositifs capteurs (2, 4).

13. Banc d'essai selon l'une des revendications 7 à 12, **caractérisé en ce qu'**il est prévu une unité émettrice (6) pour des signaux de commande destinés aux dispositifs capteurs (2, 4), qui est de préférence intégrée ou reliée avec l'unité d'évaluation et/ou de mémoire (3).

14. Banc d'essai selon l'une des revendications 7 à 13, **caractérisé en ce que** dans l'unité d'évaluation et de mémoire (3) est implémentée une procédure d'interrogation surveillant les dispositifs capteurs (2, 4) et signalant ou enregistrant un état de charge insuffisant et/ou une panne.

15. Banc d'essai selon l'une des revendications 7 à 14, **caractérisé en ce que** dans l'unité d'évaluation et de mémoire (3) est implémentée une procédure identifiant les dispositifs capteurs (2, 4) et les attribuant à des canaux de mesure déterminés.

16. Banc d'essai selon l'une des revendications 7 à 15, **caractérisé en ce que** dans la chambre d'équipement sont prévues une unité émettrice pour des signaux de commande destinés aux dispositifs capteurs (2, 4) ainsi qu'une unité d'évaluation, dans laquelle est implémentée une procédure d'interrogation surveillant les dispositifs capteurs (2, 4) et signalant ou enregistrant un état de charge insuffisant et/ou une panne.

17. Banc d'essai selon la revendication 16, **caractérisé en ce que** dans l'unité émettrice ou l'unité d'évaluation dans la chambre d'équipement est implémentée une routine identifiant les dispositifs capteurs (2, 4) et les attribuant à des canaux de mesure déterminés de l'unité d'évaluation et de mémoire (3) du banc d'essai.
